# EUROPEAN PATENT SPECIFICATION

(11) **EP 1 396 196 B1**
(45) Date of publication and mention of the grant of the patent: **18.07.2007**
(21) Application number: 02020028.3
(22) Date of filing: 06.09.2002
(51) Int. Cl.: A23G 9/28

(54) **Apparatus for preparing and distributing ice-cream sandwich**
Vorrichtung zur Speiseeissandwichzubereitung und -auslieferung
Appareil de préparation et distribution de sandwichs de crème glacée

(43) Date of publication of application: 10.03.2004
(73) Proprietor: NESTEC S.A., 1800 Vevey (CH)
(72) Inventor: Ricco, Massimilliano, Pama (IT)
(74) Representative: Elleby, Gudrun

(56) References cited:
- CA-A- 1 056 215
- GB-A- 472 428
- GB-A- 697 500
- GB-A- 1 219 593
- US-A- 1 232 576
- US-A- 2 673 531
- US-A- 2 778 321
- US-A- 3 182 611
- US-A- 4 094 236
- US-A- 5 931 086

## Description

### Field of the invention

The present invention relates to an apparatus for preparing and selling ice-creams to the public and particularly an apparatus for preparing the so-called ice-cream sandwich just before selling it.

The ice-cream sandwich is made up of a portion of ice-cream contained between two biscuits, wafers, waffles or other bakery products having a circular or poligonal shape. An apparatus for preparing such sandwiches is disclosed e.g. in US-A-4094236, GB-A-472428, US-A-2673531, US-A-1232576, US-A-3182611, CA-A-1056215, GB-A-1219593, US-A-2778321 and US-A-5931086.

### Background of the invention

They are usually industrially prepared and sold in appropriate bags. In the handicraft way these ice-creams are prepared at points of sale by using well known manual instruments that accordingly do not require a detailed description.

Such known instruments have several drawbacks, among which the poor hygiene due to the direct contact of the ice-cream with the hands of the seller. A further drawback is the long time necessary to select the type of biscuit and the real preparation of the sandwich of ice-cream between the two external biscuit layers.

### Summary of the invention

The object of the present invention is therefore to provide an apparatus allowing a rapid, economic and hygienic preparation and sale of ice-cream sandwiches. This object is achieved through the apparatus according to the present invention whose features are specified in claim 1. Further features of the apparatus according to the present invention are specified in subsequent claims.

The apparatus for preparing and distributing ice-cream sandwiches according to the present invention, apart from allowing a rapid and economic preparation of the product in the greatest observance of hygienic rules, since the operator holds the above-mentioned product only when he gives it to the consumer, has also the advantage of being easily utilizable since the operator has only to move a lever besides to insert the ice-cream, and thus the apparatus can be utilized by everybody.

A further advantage of the apparatus for preparing and distributing ice-cream sandwiches according to the present invention is that this apparatus enables the consumer to choose even the biscuit among different available products.

### Brief description of the drawings and detailed description of the invention

Other advantages and features of the apparatus according to the present invention will be clear to those skilled in the art from the following detailed description of an embodiment thereof given with reference to the attached drawings, in which:
figure 1 shows a transparent lateral view of the apparatus according to the present invention during the product pressing step;
figure 2 shows a further view of figure 1 as simplified through the omission of some components;
figure 3 shows a perspective view of an enlarged detail of figures 2 and 3; and
figure 4 shows in a lateral view several components of the apparatus not yet assembled.

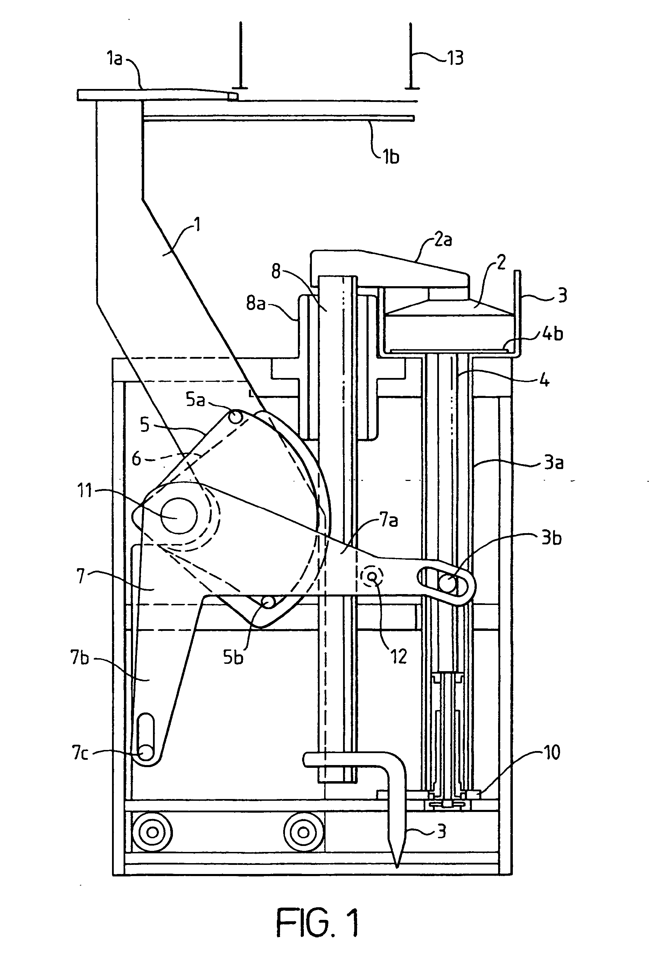

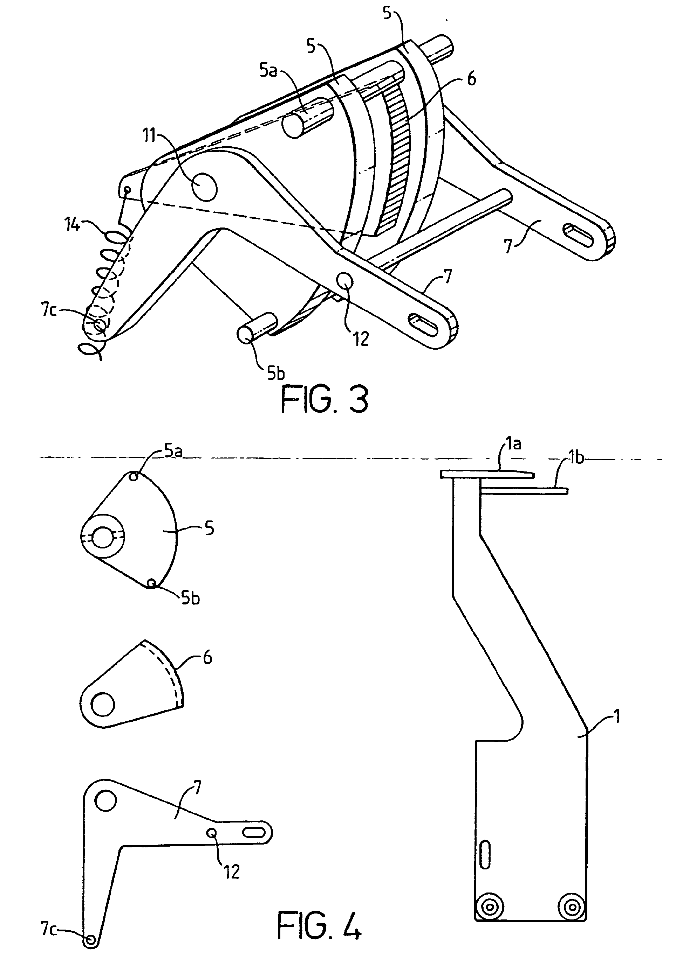

Referring to figures 1 and 3, there is shown the apparatus for manufacturing and distributing ice-cream sandwiches according to the present invention comprising a piece 5 formed by a couple of equal and parallel circular sectors firmly connected to each other by pivots 5a and 5b. Such a piece 5 is integral with a control lever (not shown in the drawing) pivoted on a lateral face of the apparatus, and drives components 6 and 7, one of which being shown in figure 4, to rotate around pivot 11 of the lever. Component 7 is made up of a couple of equal and parallel compensators, firmly connected by pivot 12 and placed externally to the two circular sectors that form piece 5. This component 7 is linked to components 1 and 3 through buttonholes and countershafts.

Component 1 is made up of a couple of equal and firmly connected parallel carriages, each provided with two wheels sliding on guides formed at the apparatus base in such a way as to be able to translate horizontally. This carriage 1 is provided at the top with a pusher 1a having the function of individually pushing the biscuits out of one of dispensers 13. The apparatus is in fact provided at the top with a plate (not shown in the drawing) that can be manually rotated and on which several biscuits dispensers 13 are placed, each for every type. Such dispensers 13 consist of containers opened at the top, in order to be easily rechargeable, and provided at the base of a lateral wall with two openings mutually facing in such a way as to let pusher 1a enter one of them and to let a biscuit exit from the other one. Carriage 1 is firmly connected to two parallel supports 1b sliding underneath said plate and acting as guides for inserting into a container 3 each biscuit extracted from dispenser 13.

The latter is formed of a cylinder opened at the top that ends with a cylinder 3a having a shorter radius. Cylinder 3a, extending nearly to the base of the apparatus, contains a stem 4 which pushes a small plate 4b to translate vertically. This small plate 4b, located inside container 3, forms the lower mobile base of container 3. Stem 4 is linked to cylinder 3a through a mechanism which allows these two pieces to be firmly connected or to reciprocally translate as will be described further.

Component 6, placed between the two circular sectors that form piece 5, is a sector provided with a toothed profile engaging an helical profile formed on a shaft 8, thus controlling both translational and rotatory motion thereof. Shaft 8, supported by a sleeve 8a, is placed between cylinder 3a and pivot 11 and is firmly connected to plunger 2 through an arm 2a and an L-shaped element 9. This L-shaped element 9 ends with a nose which, as a result of the rototranslatory motion of shaft 8, gets into a buttonhole of an element 10 acting as a linkage between cylinder 3a and stem 4.

The preparation of ice-cream sandwiches according to the present invention is carried out in four steps to which three different conditions of the apparatus correspond: the first step is the biscuit dispensing step to which corresponds the first apparatus condition, named dispensing mode; after having reset the apparatus in the resting mode, the second step is carried out, i. e. the step of inserting ice-cream inside the container; the third step consists in rearranging the apparatus in the dispensing mode so as to place a second biscuit on the ice-cream portion; finally the fourth step is carried out wherein the apparatus is arranged in pressing mode during which the product is subjected to compression and then ejected from the apparatus. The passage from a mode to another one occurs by moving the control lever from a position to another.

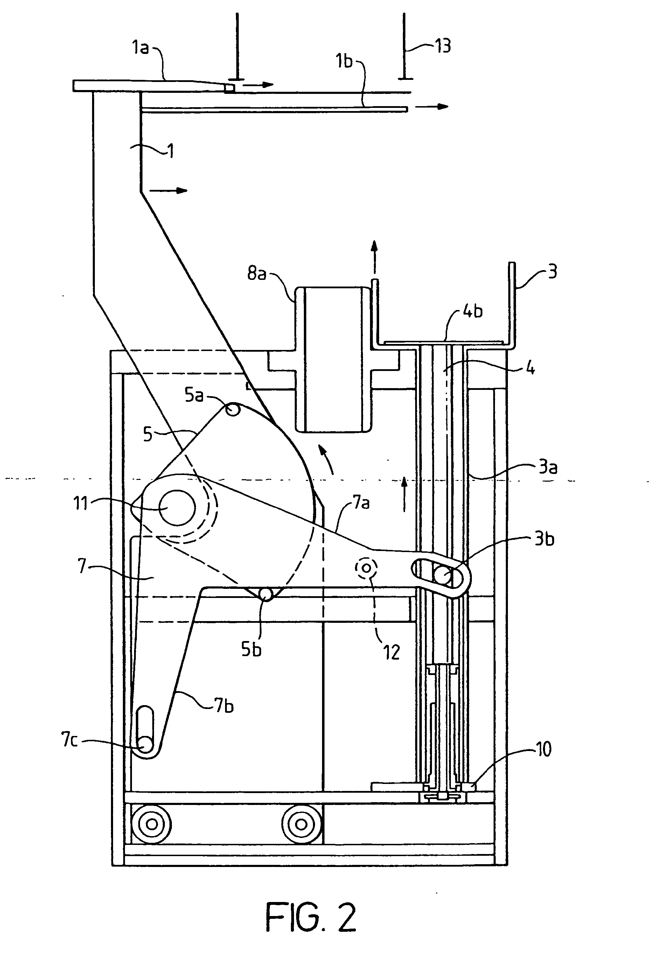

With reference to figures 2 and 3, there is shown how the first step is carried out. The arrows indicate the rotation or translation sense of the various elements. By rotating counterclockwise the control lever with respect to the starting position corresponding to the resting mode, and by so positioning it in the dispensation mode, the circular sector 5, integral with the control lever, rotates in the sense indicated by arrow, thus driving also compensator 7 to rotate through pivot 5b. The counterclockwise stroke of the circular sector 5 is, anyway, short enough to not risk to drive also toothed sector 6 to rotate through pivot 5b. Compensator 7 has a first arm, 7a provided with a buttonhole, and a second arm, 7b provided with a countershaft 7c, at which, on cylinder 3a and on carriage 1 there are respectively a countershaft 3b and a buttonhole through which compensator 7 is connected to components 1 and 3a.

These linkages work in such a way that, when compensator 7 rotates, cylinder 3a, and thus container 3, that in this step is integral therewith, moves vertically upwards thanks to countershaft 3b which changes the rotatory motion of compensator 7 into a translatory motion of cylinder 3a. In the same time, carriage 1, thanks to countershaft 7c, moves horizontally in the direction indicated by the arrow. As carriage 1 moves, also pusher 1a integral therewith, moves pushing the last biscuit of the stack outside the biscuits dispenser 13. Since also supports 1b are integral with element 1, as pusher 1a pushes the biscuit, the latter lays on these supports 1b which gradually move forward together with the same pusher 1a and drive the biscuit until it comes exactly over container 3. At this point, coinciding with the point in which pusher 1a reaches the stop, a suitable device opens the two supports 1b so to let the biscuit drop in the underneath container 3, which meanwhile has been lifted through the mechanism described above.

The biscuit is preferably put down on a special wrapping, previously placed on the bottom of container 3, which wrapping is intended to avoid that the operator cleans the apparatus after having prepared each ice-cream sandwich, and that the final product comes into contact with the hands of the operator when he gives it to the consumer.

Once the first biscuit has been placed into container 3, the operator can rearrange the lever in resting mode. This allows the compensator 7 to rotate clockwise as returned by a spring not shown in the drawing. In this way pusher 1, driven by compensator 7, moves back until it comes to the starting position, and container 3, and thus cylinder 3a together with stem 4 fixed thereto, lower again.

At this point the second preparation step of the product is carried out. This step consists of manually inserting the ice-cream on the surface of the biscuit placed inside container 3, with an appropriate proportioner spoon which, to this end, is leant at an appropriate gap formed on the lateral surface of container 3.

The third preparation step of the product consists of dispensing the second biscuit on the inserted ice-cream portion, and accordingly the procedure is the same as in the first step by arranging the lever in the distributing mode.

With reference to figures 1 and 3, there is shown how the last step, i. e. the pressing step wherein the lever is rotated clockwise so as to arrange it in the pressing mode, is carried out. The rotation of the lever in this direction makes. circular sector 5 to rotate in the sense opposite to the one in which the same sector 5 rotates in the distributing step. Sector 5, through pivot 5a, drives toothed sector 6 to rotate. The latter, together with the helicoidal profile formed on shaft 8, constitutes a gear mechanism. Therefore the rotation of toothed sector 6 causes a rototranslation of shaft 8 that is transmitted also to plunger 2 which, by rotating, comes over container 3, and by moving downwards presses the product contained therein. Simultaneously, since L-shaped element 9 is integral with shaft 8, it also moves with a rototranslatory motion so to be inserted into the buttonhole located at one end of element 10. This element 10 is thus caused, by the motion of L element 9, to move horizontally in the direction bringing it near to shaft 8. This movement releases stem 4, up to this moment integral with cylinder 3a thanks to a removable catch, and, as the lever is rearranged in the resting mode, a spring pushes upwards the stem 4. Since the latter is integral with plate 4b, it pushes also the final product upwards and hence outside container 3, thus making it easy for the operator to take it and deliver it to the consumer. Simultaneously, the toothed sector 6 is brought back in resting position by a spring 14. The latter is located in the area of toothed sector 6 opposite to the toothed profile with respect to pivot 11. This spring 14, having the other end fixed to the frame of the apparatus, is drawn during the pressing step and then released when the lever is rearranged in the resting mode while dragging with it the toothed sector 6. In order to avoid that the latter, once returned by the spring, goes on rotating thus going beyond the desired position, a locking device (not shown in the figure) is used. The toothed sector 6 causes in turn shaft 8, through the gear mechanism, to move upwards and, with it, also arm 2a, plug 2, and L-shaped element 9, which element is in this way removed from the buttonhole of piece 10. The latter gets back in the starting position through a spring. At this point it is sufficient to push plate 4b on the bottom to get the apparatus ready for preparing another ice-cream sandwich.

As a possible variation it could be envisaged to substitute supports 1b by guides fixed to the frame, which bend inwardly to let the biscuit drop when the pusher reaches the stop.

It could be also envisaged to automate the apparatus by providing it with devices for the automatic control of the sequence of various steps.

The apparatus could further be provided with electric or pneumatic actuators instead of the manually working lever.

For constructing the apparatus according to the present invention it is possible to utilize any known material regarded as suitable to construct apparatuses of conventional type.

## Claims

1. An apparatus for preparing and distributing alimentary products formed of a portion of ice-cream, mousse, or the like contained between two biscuits, wafers, waffles or other bakery products, **characterized in that** it comprises at least a biscuit dispenser (13); a container (3) suited to receive the product; means (1, 1a, 1b) suited to drive the biscuits from said dispenser (13) to said container (3); means (2) for compressing the product and means (4) for ejecting the final product; as well as means suited to control the movement of said elements and the controlling means act on a pivot (11) whereon there is keyed a circular sector (5) provided with two pivots (5a, 5b) suited to cause to respectively rotate a toothed sector (6) and a compensator (7) both rotating around said pivot (11) of said circular sector (5).

2. The apparatus according to claim 1, **characterized in that** said control means consist of a lever or an equivalent means.

3. The apparatus according to claim 1, **characterized in that** said control means consist of electric or pneumatic actuators acting on the pivot (11).

4. An apparatus according to one or more previous claims, **characterized in that** it has such linkages that while the container (3) is getting near to the biscuit dispenser (13), a pusher (1a) pushes a biscuit on one or more supports (1b) which in the meantime move forward to leave then the biscuit drop when this comes over the container (3).

5. The apparatus according to claim 4, **characterized in that** said linkages are made sure by two arms (7a, 7b) of the compensator (7) which are respectively suited to make a cylinder (3a), integral with the container (3), move upwards, and to make a carriage (1), integral with pusher (1a) and with supports (1b), move horizontally.

6. An apparatus according to one or more previous claims, **characterized in that** it has such linkages that, while the pressing means (2) are compressing the product, a mechanism (9, 10, 4), acting in such a way as to prepare the ejection of the final product, is set in motion.

7. The apparatus according to claim 6, **characterized in that** said pressing means (2) are a plunger and said linkages are carried out through a shaft (8) firmly connected to said plunger through an arm (2a) and to an element (9) acting in such a way as to unengage an element (10) which previously kept a stem (4) firmly connected to the cylinder (3 a).

8. An apparatus according to one or more previous claims, **characterized in that** it is provided at the top with a rotating plate on which at least two dispensers of biscuits or other bakery products rest.

## Patentansprüche

1. Vorrichtung zur Herstellung und Auslieferung von Nahrungsmittelprodukten in Form einer Portion Eiscreme, Mousse oder ähnlichem, die zwischen zwei Biskuits, Waffeln, Oblaten oder anderen Backwaren enthalten sind, **dadurch gekennzeichnet, dass** sie zumindest eine Biskuitausgabevorrichtung (13), einen Behälter (3), geeignet, um das Produkt aufzunehmen, Mittel (1, 1a, 1b), die geeignet sind, um die Biskuits von der Ausgabevorrichtung (13) zu dem Behälter (3) zu bewegen, Mittel (2), um das Produkt zusammen zu pressen, und Mittel (4), um das Endprodukt auszugeben, ebenso wie Mittel, die geeignet sind, um die Bewegung der Elemente zu steuern, und wobei die Steuerungsmittel auf eine Drehachse (11) wirken, auf welcher ein Kreisabschnitt (5) verankert ist, der mit zwei Drehachsen (5a, 5b) ausgestattet ist, die geeignet sind, um einen gezahnten Ausschnitt (6) und eine Wippe (7), entsprechend zum Drehen zu veranlassen, wobei beide um die Drehachse (11) des Kreisausschnitts (5) rotieren.

2. Vorrichtung nach Anspruch 1, **dadurch gekennzeichnet, dass** die Steuerungsmittel aus einem Hebel oder einem gleich wirkenden Mittel bestehen.

3. Vorrichtung nach Anspruch 1, **dadurch gekennzeichnet, dass** die Steuerungsmittel aus elektrischen oder pneumatischen Aktuatoren, welche auf die Drehachse (11) wirken, bestehen.

4. Vorrichtung nach einem oder mehreren der vorhergehenden Ansprüche, **dadurch gekennzeichnet, dass** sie Verbindungen aufweisen, die derart ausgebildet sind, dass, während der Behälter (3) nahe zu der Biskuitausgabevorrichtung (13) gelangt, ein Schieber (1a) einen Biskuit auf einen oder mehrere Träger (1b) schiebt, die sich in der Zwischenzeit nach vorne schieben, um den Biskuit dann fallen zu lassen, wenn er über den Behälter (3) kommt.

5. Vorrichtung nach Anspruch 4, **dadurch gekennzeichnet, dass** die Verbindungen durch zwei Arme (7a, 7b) der Wippe (7) gesichert werden, welche entsprechend geeignet sind, um einen Zylinder (3a), der mit dem Behälter (3) eine Einheit bildet, dazu zu veranlassen, sich nach oben zu bewegen, und um eine Beförderungsvorrichtung (1), die mit dem Schieber (1a) und mit Trägern (1b) eine Einheit bildet, dazu zu veranlassen sich horizontal zu bewegen.

6. Vorrichtung nach einem oder mehreren der vorhergehenden Ansprüche, **dadurch gekennzeichnet, dass** sie solche Verbindungen hat, dass, während die Druck ausübenden Mittel (2) das Produkt komprimieren, ein Mechanismus (9, 10, 4) der auf solche Weise wirkt, dass das Ausgeben des Endprodukts vorbereitet wird, in Bewegung gesetzt wird.

7. Vorrichtung nach Anspruch 6, **dadurch gekennzeichnet, dass** die Druck ausübenden Mittel (2) ein Kolben sind und dass die Verbindungen durch eine Welle (8) ausgeführt sind, der fest mit dem Kolben durch einen Arm (2a) und mit einem Element (9) verbunden ist und auf solche Weise wirkt, dass sie ein Element (10) auslöst, welches zuvor einen Stiel (4) gehalten hat, der fest mit dem Zylinder (3a) verbunden war.

8. Vorrichtung nach einem oder mehreren vorhergehenden Ansprüche, **dadurch gekennzeichnet, dass** sie an der Oberseite mit einer rotierenden Platte ausgestattet ist, auf welcher zumindest zwei Ausgabevorrichtungen für Biskuits oder andere Backwaren lagern.

## Revendications

1. Appareil pour préparer et distribuer des produits alimentaires formés d'une portion de crème glacée, mousse, ou analogue, contenue entre deux biscuits, gaufrettes, gaufres, ou autres produits de boulangerie, **caractérisé en ce qu'**il comprend au moins un distributeur de biscuits (13) ; un récipient (3) apte à recevoir le produit ; des moyens (1, 1a, 1b) aptes à entraîner les biscuits du distributeur (13) audit récipient (3) ; un moyen (2) pour comprimer le produit et un moyen (4) pour éjecter le produit final ; ainsi qu'un moyen apte à commander le mouvement desdits éléments, et le moyen de commande agissant sur un pivot (11) sur lequel est calé un secteur circulaire (5) pourvu de deux pivots (5a, 5b) aptes à provoquer respectivement la rotation d'un secteur denté (6) et d'un compensateur (7) tournant tous les deux autour dudit pivot (11) dudit secteur circulaire (5).

2. Appareil selon la revendication 1, **caractérisé en ce que** ledit moyen de commande consiste en un levier ou un moyen équivalent.

3. Appareil selon la revendication 1, **caractérisé en ce que** ledit moyen de commande consiste en actionneurs électriques ou pneumatiques agissant sur le pivot (11).

4. Appareil selon l'une ou plusieurs des revendications précédentes, **caractérisé en ce qu'**il comporte des embiellages tels que, tandis que le récipient (3) se rapproche du distributeur de biscuits (13), un poussoir (1a) pousse un biscuit sur un ou plusieurs supports (1b) qui, entre temps, se déplacent vers l'avant pour laisser ensuite tomber le biscuit lorsque celui-ci se place sur le récipient (3).

5. Appareil selon la revendication 4, **caractérisé en ce que** lesdits embiellages sont assurés par deux bras (7a, 7b) du compensateur (7) qui sont respectivement aptes à amener un cylindre (3a), d'un seul tenant avec le récipient (3), à se déplacer vers le haut, et à amener un chariot (1), d'un seul tenant avec le poussoir (1a) et avec les supports (1b), à se déplacer horizontalement.

6. Appareil selon l'une ou plusieurs des revendications précédentes, **caractérisé en ce qu'**il comporte des embiellages tels que, tandis que le moyen de pression (2) comprime le produit, un mécanisme (9, 10, 4), agissant de manière à préparer l'éjection du produit final, est mis en mouvement.

7. Appareil selon la revendication 6, **caractérisé en ce que** ledit moyen de pression (2) est un plongeur et lesdits embiellages sont réalisés via un arbre (8) relié solidement audit plongeur via un bras (2a) et à un élément (9) agissant de manière à désengager un élément (10) qui gardait précédemment une tige (4) reliée fermement au cylindre (3a).

8. Appareil selon l'une ou plusieurs des revendications précédentes, **caractérisé en ce qu'**il est doté, au sommet, d'une plaque rotative sur laquelle reposent au moins deux distributeurs de biscuits ou d'autres produits de boulangerie.
